# FASCICULE DE BREVET EUROPEEN

(11) **EP 2 064 855 B1**
(45) Date de publication et mention de la délivrance du brevet: **24.02.2016**
(21) Numéro de dépôt: 07848336.9
(22) Date de dépôt: 18.09.2007
(51) Int. Cl.: H04L 29/08, H04L 29/06

(54) **PROCEDE DE COMMUNICATION ENTRE PLUSIEURS TERMINAUX**
VERFAHREN ZUR KOMMUNIKATION ZWISCHEN MEHREREN ENDGERÄTEN
METHOD OF COMMUNICATING BETWEEN SEVERAL TERMINALS

(30) Priorité: 20.09.2006 FR 0653843
(43) Date de publication de la demande: 03.06.2009
(73) Titulaire: Orange, 75015 Paris (FR)
(72) Inventeur: BOUVET, Bertrand, F-22700 Perros-Guirec (FR)
(74) Mandataire: Cabinet Plasseraud
(86) Numéro de dépôt international: PCT/FR2007/051964
(87) Numéro de publication internationale: WO 2008/035009

(56) Documents cités:
- EP-A- 1 594 287
- US-A1- 2005 157 660
- US-A1- 2005 157 660
- US-A1- 2006 122 717

## Description

L'invention concerne le domaine des télécommunications, et plus particulièrement un procédé de communication entre au moins deux dispositifs, incluant des terminaux, des serveurs vocaux de type messagerie, audiotel, portail, etc., connectés à un même réseau de communication ou à des réseaux de communication différents.

L'invention trouve une application dans le domaine de la téléphonie, de la visiophonie, de l'échange de texte ou de données, en mode point à point entre deux dispositifs ou en mode conférence entre plus de deux dispositifs, pour toute communication notamment, mais pas exclusivement, dans les situations suivantes :
- au moins un des dispositifs dispose de capacités d'émission de flux multimédias inférieures aux capacités de traitement de flux multimédias d'au moins un autre des dispositifs, ou
- un réseau auquel est connecté l'un des dispositifs dispose de capacités de transfert de flux multimédia inférieures aux capacités de traitement de flux multimédia d'un autre des dispositifs.

Plus généralement, l'invention vise à satisfaire des capacités de traitement de flux multimédia d'un dispositif multimédia lorsqu'un autre dispositif distant engagé dans la communication ne dispose pas des mêmes capacités ou lorsqu'un réseau sur lequel est connecté l'un des dispositifs ne dispose pas de capacités de transfert multimédia appropriées.

Par flux multimédia, on entend ici et dans tout ce qui suit un flux de données numériques relatives à tout type de supports d'informations, quelle que soit la nature de ces informations : informations sonores, visuelles (texte, image, vidéo, etc.), tactiles, olfactives, gustatives, etc. Un flux multimédia peut comprendre plusieurs canaux comprenant chacun des données relatives à un support d'information (son, image, vidéo, etc.), plusieurs canaux pouvant être associés à un même support d'information.

Par capacités (ou propriétés) de traitement multimédia, on entend ici les capacités d'un dispositif à exploiter (afficher, modifier, répondre à, etc.) un flux multimédia comprenant un ou plusieurs canaux. Par capacités (ou propriétés) d'émission multimédia, on entend ici les capacités d'un dispositif à produire et à transmettre sur un réseau approprié un flux multimédia comprenant un ou plusieurs canaux. Par capacités (ou propriétés) de transfert multimédia, on entend ici les capacités d'un dispositif ou d'un réseau à transmettre un flux multimédia comprenant un ou plusieurs canaux. Enfin, un premier dispositif ou un premier réseau a des capacités multimédia inférieures aux capacités d'un deuxième dispositif ou d'un deuxième réseau si le premier dispositif ou le premier réseau peut émettre, transmettre et / ou exploiter un flux multimédia comprenant un nombre de canaux inférieur au nombre de canaux d'un flux multimédia susceptible d'être émis, transmis et / ou exploité par le second dispositif ou le second réseau.

Le service téléphonique s'appuie encore très largement sur des réseaux à commutation de circuits (fixes ou mobiles), et bon nombre de dispositifs (terminaux, serveurs vocaux, etc.) de téléphonie ont des capacités limitées à des capacités audio monophoniques, c'est-à-dire des capacités limitées à la production, la réception et l'exploitation d'un flux multimédia comprenant un unique canal comprenant des données relatives à un signal audio monophonique.

Les dispositifs de communication apparaissant sur le marché ont de plus en plus de capacités multimédia (on parlera par abus de langage de dispositifs multimédia), c'est-à-dire de capacités à recevoir, exploiter et produire des flux contenant à la fois des données audio, vidéo, textuelles, etc. C'est par exemple le cas des terminaux de type PC munis de logiciels de Voix sur IP, ou des terminaux téléphoniques multimodes (GMS + WIFI par exemple) comprenant des capacités de téléphonie sur IP et des capacités audio stéréophoniques.

Toutefois, lors d'une communication entre dispositifs comme par exemple dans le document US 2006122717, les propriétés de la communication sont limitées aux propriétés du dispositif engagé dans la communication et ayant le moins de capacités multimédia. Par exemple, lors d'une communication entre un terminal téléphonique connecté à un réseau commuté et un terminal multimédia connecté à un réseau de Voix sur IP ou un réseau commuté, les propriétés de la communication seront nécessairement monophoniques car limitées par le maillon ayant le moins de capacités multimédia, à savoir le réseau commuté.

L'invention offre une solution technique qui ne présente pas ces inconvénients.

Pour cela l'invention propose un procédé de communication entre au moins deux dispositifs ainsi que décrit dans la revendication 1.

L'invention permet ainsi à l'utilisateur d'un dispositif doté de moyens de traitement de flux audio comprenant P canaux de profiter des propriétés de son dispositif, y compris lorsque son correspondant dispose d'un dispositif ou d'un réseau doté de propriétés multimédia différentes, voire inférieures. Comme indiqué précédemment, un flux multimédia peut comprendre des données relatives simultanément à un signal sonore, un texte, une vidéo, une image, etc.

Dans un mode particulier de mise en oeuvre de l'invention, l'étape d'acheminement n'est réalisée que si N est inférieur à P, c'est-à-dire si le premier dispositif et / ou le premier réseau et / ou le deuxième réseau dispose(nt) de capacités d'émission ou de transmission multimédia inférieures aux capacités de traitement multimédia du deuxième dispositif. On évite ainsi de réaliser une étape d'acheminement lorsque son effet, l'augmentation du nombre de canaux du flux multimédia reçu par le deuxième dispositif, ne présente pas d'intérêt pour le deuxième dispositif.

Le premier flux multimédia pourra comprendre N canaux, et le deuxième flux multimédia pourra comprendre jusqu'à P - N canaux. On exploite ainsi au mieux les capacités d'émission et de transmission du premier dispositif, du premier réseau ou du deuxième réseau et les capacités de traitement du deuxième dispositif.

L'étape de détermination pourra être réalisée à la demande d'un utilisateur du premier dispositif. Ceci permet par exemple à l'utilisateur du premier dispositif, connaissant les capacités limitées du premier dispositif, de demander à ce que un deuxième flux multimédia, contenant par exemple une vidéo telle qu'une publicité, soit envoyé à ses correspondants ou à certains d'entre eux.

L'étape de détermination pourra être réalisée également à la demande d'un utilisateur du deuxième dispositif. Ceci permet par exemple à l'utilisateur du deuxième dispositif de demander l'acheminement d'un deuxième flux multimédia (correspondant à une musique par exemple) lorsqu'un premier flux qu'il reçoit a un nombre de canaux inférieurs aux capacités du deuxième dispositif.

L'étape de détermination pourra avantageusement être réalisée pendant l'étape de mise en relation. Des informations habituellement échangées entre les dispositifs au cours de l'étape de mise en relation pourront ainsi être utilisées simultanément au cours de l'étape de détermination.

Plus généralement, l'étape de détermination pourra être réalisée à tout moment pendant une communication, éventuellement après une étape de transfert d'un flux multimédia. Ceci permet par exemple à un utilisateur du deuxième dispositif qui se rend compte qu'un premier flux multimédia que le deuxième dispositif reçoit a un nombre de canaux inférieurs aux capacités de traitement multimédia du deuxième dispositif.

L'invention concerne également un système de communication ainsi que décrit dans la revendication 8.

L'invention sera mieux comprise et d'autres caractéristiques et avantages apparaîtront à la lecture de la description qui va suivre, d'exemples de mise en oeuvre d'un procédé de connexion et d'un système de connexion selon l'invention.

La description est à lire en relation aux dessins annexés dans lesquels :
- la figure 1 est un schéma bloc montrant la mise en oeuvre d'un procédé de communication connu entre deux terminaux
- la figure 2 est un schéma bloc montrant la mise en oeuvre d'un procédé de communication selon l'invention Le procédé selon l'invention va être décrit ci-dessous tout d'abord dans le cadre d'un exemple de communication entre un premier dispositif et un deuxième dispositif matérialisés par des premier et deuxième terminaux particuliers.

Dans d'autres modes de mise en oeuvre de l'invention, les dispositifs concernés pourront être en nombre supérieur à deux, et inclure des serveurs, par exemple des serveurs d'information de type Audiotel ou encore des serveurs de messagerie vocale, etc.

Un procédé de communication connu comprend notamment :
- une étape de mise en relation d'un premier dispositif et d'un deuxième dispositif, dans l'exemple des premier et deuxième terminaux particuliers,
- une étape de transfert d'un premier flux multimédia du premier dispositif vers le deuxième dispositif.

L'étape de transfert d'un flux audio entre les deux terminaux est répétée naturellement pendant toute la communication.

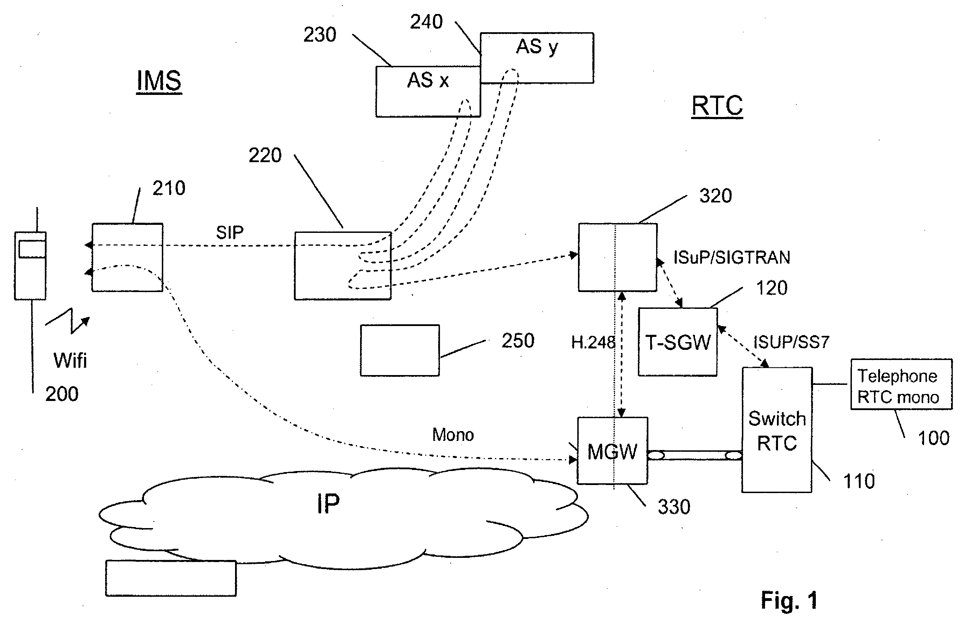

La figure 1 présente un mode de mise en oeuvre connu d'un procédé de communication connu entre deux terminaux particuliers connectés à des réseaux particuliers.

Le premier terminal 100 est connecté à un premier réseau non adapté pour le transfert de flux multimédia et adapté seulement pour le transfert de flux audio monophonique. Dans un exemple concret, le premier réseau est de type réseau téléphonique commuté (réseau RTC). Le premier terminal est quant à lui un téléphone fixe classique 100 dont au moins une base est reliée par un fil à une prise téléphonique connectée à un commutateur 110.

Le réseau RTC comprend notamment le commutateur 110 qui est un point d'entrée du premier terminal sur le réseau RTC, un élément d'entrée 120 de gestion de demandes de mise en relation (T-GSM) ayant principalement une fonction de passerelle pour transporter la signalisation d'appel ISUP sur des couches protocolaires différentes et une fonction de transmission d'une demande de mise en relation émise par ou pour le premier terminal ou d'une acceptation de mise en relation émise pour ou par le premier terminal.

Dans l'exemple, pour la transmission de demandes de mise en relation et d'acceptations de mise en relation, le réseau RTC utilise notamment un protocole de signalisation ISUP (Integrated Service Digital Network Signalling User Part). Mais tout autre protocole connu adapté au premier réseau peut être utilisé.

Le deuxième terminal 200 est connecté à un deuxième réseau ; le deuxième terminal et le deuxième réseau ont des propriétés multimédia. Dans un exemple concret, le deuxième réseau est un réseau de téléphonie sur IP doté d'une architecture classique de type IMS (IP Multimedia Subsystem). Le deuxième terminal quant à lui est un téléphone portable 200 relié par une liaison WIFI à un équipement d'accès 210, tel qu'un modem ADSL (Asymetric Digital Subscriber Line) et / ou un routeur, et comprenant un écran d'affichage de texte, d'image et / ou de vidéo et un transducteur acoustique stéréophonique tel qu'un casque stéréophonique à deux oreillettes.

Le deuxième réseau comprend notamment un équipement d'entrée 220 (P-I-S-CSCF) ayant pour principales fonctions :
- d'identifier et d'enregistrer le deuxième terminal 200 sur le deuxième réseau,
- de transmettre une demande de mise en relation émise par ou pour le deuxième terminal 200, ou de transmettre une acceptation de mise en relation émise par ou pour le deuxième terminal.

Le deuxième réseau peut également comprendre un ou plusieurs serveurs 230, 240 susceptibles de fournir à l'utilisateur du deuxième terminal un ou plusieurs services applicatifs tels que par exemple un service de messagerie vocale, des services avancés de téléphonie. Le deuxième réseau peut également comprendre un serveur de ressources multimédia 250, ayant par exemple pour fonction d'émettre un flux multimédia contenant un message vocal ou vidéo, d'effectuer une reconnaissance vocale sur un flux audio, de mixer des flux multimédias reçus dans le cadre d'une communication en mode conférence, etc.

Dans l'exemple, pour la transmission de demandes de mise en relation et d'acceptations de mise en relation, le deuxième réseau utile notamment un protocole de signalisation SIP (Session Initiation Protocol). Mais tout autre protocole connu adapté au deuxième réseau peut être utilisé.

Les deux réseaux sont interconnectés par l'intermédiaire d'une passerelle 320 de mise en relation et d'une passerelle 330 de données.

Le commutateur 110, le dispositif 120, la passerelle 320, le dispositif 220 et l'équipement d'accès 210 forment ensemble un système de mise en relation du premier terminal et du deuxième terminal, apte à réaliser l'étape de mise en relation du procédé de communication.

Le commutateur 110, la passerelle 330 et l'équipement 210 forment ensemble un système de transfert d'un flux audio depuis le premier terminal vers le deuxième terminal (ou l'inverse).

Sur la figure 1 est également représenté le cheminement classique des signaux lors d'une communication entre le premier terminal et le deuxième terminal.

L'étape de mise en relation se fait de la manière suivante. Le deuxième terminal 200 émet une demande de mise en relation selon le protocole SIP, cette demande est transmise par le dispositif 220 à la passerelle 320, qui convertit cette demande dans le protocole ISUP et la transmet à l'élément 120 puis au commutateur 110 qui la transmet finalement au premier terminal. Lorsque l'utilisateur du premier terminal accepte la mise en relation (en activant le combiné téléphonique du premier terminal), une acceptation de la mise en relation est transmise au deuxième terminal par un chemin inverse, par l'intermédiaire du commutateur 110, de l'élément 120, puis de la passerelle 320 puis de l'élément 220, puis de l'équipement 210. Bien sûr, si la communication est à l'initiative de l'utilisateur du premier terminal, la demande de mise en relation est émise par le premier terminal et transmise au deuxième terminal, et l'acceptation de la mise en relation suit le chemin inverse.

Après réception par le deuxième terminal de l'acceptation de la mise en relation, un canal de communication est établi entre l'équipement d'accès 210, la passerelle de données 330, le commutateur 110, et le transfert de signaux audio entre les utilisateurs se fait par transfert de flux audio sur le canal de communication entre les deux terminaux. L'étape de transfert peut être répétée plusieurs fois au cours de la communication. Dans le réseau RTC et dans le réseau de téléphonie IP, les flux audio sont monophoniques et transitent sur un unique canal.

Un procédé de communication selon l'invention se distingue d'un procédé antérieur en ce qu'il comprend également les étapes suivantes :
- une étape de détermination, au cours de laquelle il est constaté que le premier dispositif ou un premier réseau de communication auquel est connecté le premier dispositif ou un deuxième réseau auquel est connecté le deuxième dispositif est adapté pour la production ou le transfert d'un flux multimédia comprenant N canaux, et que le deuxième dispositif comprend des moyens de traitement d'un flux multimédia comprenant P canaux, et
- une étape d'acheminement d'un deuxième flux multimédia vers le deuxième dispositif, réalisée en parallèle de l'étape de transfert du premier flux multimédia.

Dans l'exemple choisi,
- l'étape de détermination est réalisée en parallèle de l'étape de mise en relation,
- l'étape d'acheminement d'un deuxième flux multimédia est réalisée en parallèle de l'étape de transfert d'un premier flux multimédia, uniquement si N est inférieur à P,
- le premier flux multimédia est un flux audio comprenant N = 1 canal comprenant un son monophonique (par exemple une voix), et le deuxième flux multimédia est un flux audio comprenant P - N = 1 canal comprenant également un son monophonique (par exemple une musique).

Dans l'exemple choisi également, le premier terminal et le premier réseau sont appropriés pour la production ou le transfert d'un flux multimédia comprenant N = 1 canal (ils sont limités à l'échange de flux audio monophoniques) et le deuxième terminal et le deuxième réseau sont appropriés pour transmettre ou exploiter des flux multimédia à P = 2 canaux. L'étape de détermination aboutit donc à une conclusion positive et une étape d'acheminement d'un deuxième flux multimédia est réalisée, en parallèle de chaque étape de transfert d'un flux audio (premier flux multimédia).

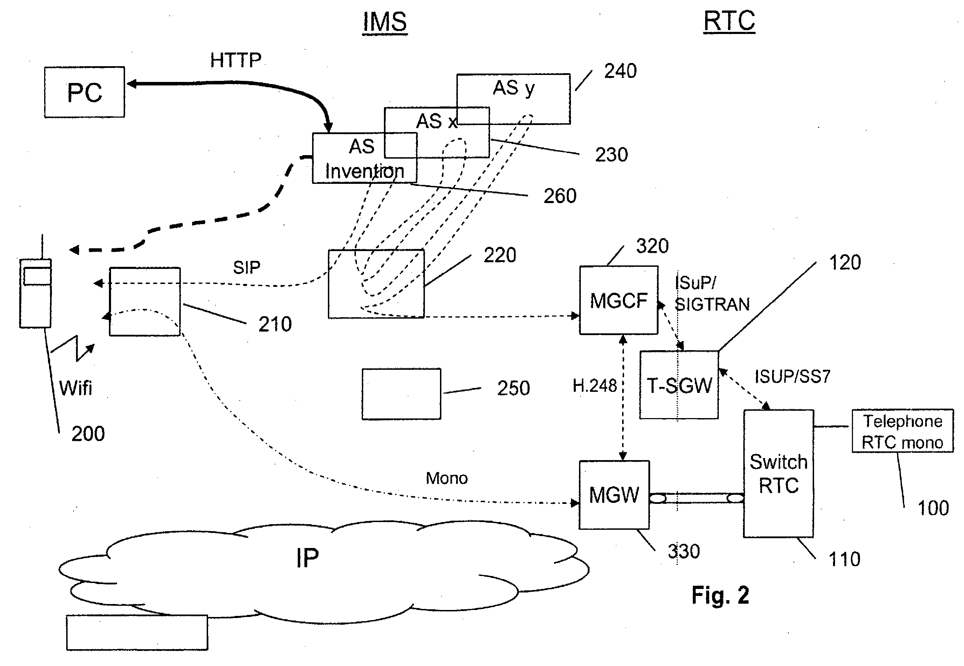

La figure 2 montre un mode de mise en oeuvre du procédé de l'invention, par l'intermédiaire d'un serveur d'application 260 dédié du deuxième réseau.

Lors de l'étape de mise en relation, le dispositif 220 transmet une demande de mise en relation reçue du deuxième terminal 200 d'une part au premier terminal (comme dans un procédé connu) et d'autre part au serveur d'application 260. Le dispositif 220 transmet ensuite l'acceptation reçue du premier terminal 100 d'une part au deuxième terminal 200 et d'autre part à un module de détermination du serveur d'application 260.

Dans le mode de mise en oeuvre de la figure 2, l'étape de détermination est réalisée par des moyens de détermination du serveur d'application 260. A partir des informations (concernant notamment le nombre de ports sur lesquels le deuxième terminal est susceptible de recevoir un signal audio, un signal vidéo, un signal de texte, etc.) contenues dans la demande de mise en relation, les moyens de détermination déterminent les propriétés de réception multimédia du deuxième terminal 200. De la même façon, à partir des informations (concernant notamment le nombre de ports sur lesquels le premier terminal est susceptible d'émettre un signal audio, un signal vidéo, un signal de texte, etc.) contenues dans l'acceptation de mise en relation, les moyens de détermination déterminent les propriétés d'émission multimédia du premier terminal. Les moyens de détermination déterminent enfin si l'étape d'acheminement doit être réalisée ou non.

Après l'étape de mise en relation, et l'étape de détermination, une étape d'acheminement d'un deuxième flux multimédia vers le deuxième terminal est réalisée par des moyens d'acheminement du serveur d'application 260, en parallèle de l'étape de transfert du premier flux multimédia (flux audio) depuis le premier terminal vers le deuxième terminal.

Le contenu du deuxième flux multimédia produit et acheminé par les moyens d'acheminement vers le deuxième terminal 200 peut dépendre de plusieurs paramètres, fournis par les moyens de détermination en même temps qu'une instruction d'exécution d'une étape d'acheminement.

Le contenu du flux multimédia dépend tout d'abord de la différence P - N de capacités multimédia entre d'une part le deuxième terminal et le deuxième réseau et d'autre part le premier terminal et le premier réseau, comme on va le voir dans les exemples ci-dessous.

Dans l'exemple pratique choisi et décrit précédemment, le premier terminal et le premier réseau sont limités à des flux audio monophoniques (N = 1); le deuxième terminal et le deuxième réseau peuvent par contre exploiter des flux multimédia comprenant P = 4 canaux comprenant un signal audio stéréophonique (ou deux signaux audio monophoniques), une image ou une vidéo et un texte. Le premier flux multimédia (flux audio relatif à la communication téléphonique) transmis par le premier terminal lors de l'étape de transfert, peut donc être complété lors de l'étape d'acheminement par un deuxième flux multimédia contenant un autre signal audio monophonique (un signal musical ou un signal audio d'information par exemple), un signal vidéo ou d'image (une publicité ou une bande annonce de film par exemple), et / ou un signal de texte (un texte relatif à des informations sur les services proposés par le serveur 260 ou un programme de cinéma par exemple).

Bien sûr, dans un autre exemple d'un deuxième terminal disposant de moyens de réception d'un flux multimédia comprenant seulement deux signaux audio monophoniques (ou un signal stéréophonique) mais ne comprenant pas de signal vidéo et / ou de texte, le deuxième flux multimédia acheminé par le serveur 260 sera limité à un flux audio monophonique (un flux musical par exemple).

Le contenu du deuxième flux multimédia peut dépendre également de paramètres imposés par l'utilisateur ou le propriétaire du deuxième terminal 200 au serveur 260, par exemple à l'aide d'un terminal portable 270 de type PC (Personal Computer) ou à l'aide du terminal 200, et qui sont mémorisés dans une mémoire du serveur 260. L'utilisateur ou le propriétaire du terminal 200 peut ainsi demander que l'étape de détermination et l'étape d'acheminement soient réalisées ou non. L'utilisateur peut également décider de recevoir un flux multimédia particulier (une musique particulière ou une publicité particulière par exemple) lorsqu'il appelle un terminal 100 prédéfini (ou l'un des terminaux d'un ensemble de terminaux qu'il définit) ou lorsqu'il reçoit un appel téléphonique de ce terminal 100 prédéfini (ou d'un terminal de l'ensemble de terminaux qu'il a défini).

Le contenu du deuxième flux multimédia peut encore dépendre de paramètres imposés par le propriétaire du serveur 260 et qui sont mémorisés dans une mémoire du serveur 260. Le propriétaire du serveur 260 peut ainsi décider par exemple que le serveur 260 (et le procédé de l'invention associé) est accessible de manière restreinte, par exemple sur abonnement.

Le contenu du flux multimédia peut dépendre également de paramètres imposés par l'utilisateur ou le propriétaire du premier terminal 100 au serveur 260, par exemple à l'aide d'un terminal portable de type PC (Personal Computer) ou à l'aide du terminal 100, et qui sont mémorisés dans une mémoire du serveur 260. L'utilisateur ou le propriétaire du terminal 100 peut ainsi demander que l'étape de détermination et l'étape d'acheminement soient réalisées ou non. L'utilisateur ou le propriétaire du terminal 100 peut également décider qu'un deuxième flux multimédia particulier (une musique particulière ou une publicité particulière par exemple) soit envoyé à tout terminal (éventuellement tout terminal d'une liste prédéfinie) qui contacte le terminal 100 et qui est doté de propriétés multimédia.

Dans le mode de mise en oeuvre de l'invention décrit ci-dessus, on a considéré que :
- le premier terminal et le premier réseau disposent uniquement de propriétés audio monophoniques (N = 1),
- le deuxième terminal et le deuxième réseau disposent de propriétés multimédias incluant la possibilité de recevoir et d'exploiter un flux audio stéréophonique, un flux d'image ou de vidéo et un flux de texte (P = 4),
- les moyens de détermination et les moyens d'acheminement se trouvent dans un serveur d'application du deuxième réseau

Mais bien d'autres modes de mise en oeuvre sont possibles.

Le premier réseau et le deuxième réseau peuvent être deux réseaux de type Voix sur IP interconnectés, ou même un unique réseau de type Voix sur IP.

Le premier terminal peut disposer de propriétés multimédia équivalentes à celles du deuxième terminal (N = P). L'invention a dans ce cas un intérêt notamment dans le cas où le premier réseau ou le deuxième réseau a des propriétés inférieures aux propriétés des terminaux.

Les moyens d'acheminement peuvent être des moyens du serveur 250 de ressources multimédia du deuxième réseau, ou des moyens d'un serveur de ressources multimédia du premier réseau.

Plus généralement, les moyens de détermination peuvent être des moyens :
- d'un serveur d'application du premier réseau ou du deuxième réseau (par exemple le serveur 250), ou
- de l'équipement d'accès 210 du deuxième dispositif au deuxième réseau, ou
- de l'élément d'entrée 220 du deuxième réseau, ou
- du deuxième dispositif.

Les moyens d'acheminement peuvent être des moyens :
- d'un serveur d'application du premier réseau ou du deuxième réseau, ou
- d'un serveur de ressources multimédia du premier réseau ou du deuxième réseau, ou
- d'un équipement d'accès 210 du deuxième dispositif au deuxième réseau, ou
- d'un élément d'entrée 220 du deuxième réseau, ou
- du deuxième dispositif.

Si les moyens de détermination et les moyens d'acheminement sont des moyens de l'équipement de connexion 210, ou même du dispositif 200, alors l'invention peut également être utilisée également si le premier réseau et le deuxième réseau disposent de propriétés multimédias inférieures aux propriétés multimédias du deuxième dispositif.
- Les moyens de détermination et / ou les moyens d'acheminement peuvent être mis en oeuvre sous la forme de tâches logicielles.

## Revendications

1. Procédé de communication entre au moins deux dispositifs, comprenant notamment les étapes suivantes :
• une étape de mise en relation d'un premier dispositif et d'au moins un deuxième dispositif,
• le premier dispositif étant connecté à un premier réseau de communication,
• ledit au moins un deuxième dispositif étant connecté un deuxième réseau de communication,
• ledit premier dispositif ou ledit premier réseau de communication ou ledit deuxième réseau de communication étant adapté pour la production ou le transfert d'un flux multimédia comprenant N canaux,
• ledit au moins un deuxième dispositif comprend des moyens de traitement d'un flux multimédia comprenant P canaux, avec N inférieur à P, et
• une étape de transfert d'un premier flux multimédia depuis le premier dispositif vers ledit au moins un deuxième dispositif,
**caractérisé en ce qu'**il comprend également les étapes suivantes :
• une étape de détermination, sur la base d'informations reçues pendant l'étape de mise en relation, si un acheminement d'un deuxième flux multimédia, comprenant jusqu'à P - N données multimédia complémentaires, est possible ou non, et
• s'il est déterminé que l'acheminement est possible, une étape d'acheminement du deuxième flux multimédia vers ledit au moins un deuxième dispositif, ladite étape d'acheminement étant réalisée en parallèle de l'étape de transfert du premier flux multimédia, ledit deuxième flux multimédia provenant d'un serveur de ressources multimédia pour la transmission de données multimédia.

2. Procédé selon la revendication 1, dans lequel le premier flux multimédia ou le deuxième flux multimédia comprend des données relatives à un signal sonore et / ou à un texte et / ou à un signal vidéo et / ou à un signal d'image.

3. Procédé selon l'une des revendications 1 et 2, dans lequel le premier flux multimédia comprend N canaux et dans lequel le deuxième flux multimédia comprend P - N canaux.

4. Procédé selon l'une des revendications 1 à 3, dans lequel un contenu du deuxième flux multimédia est fonction de paramètres fixés par un utilisateur du premier dispositif, de paramètres fixés par un utilisateur du deuxième dispositif, et / ou de paramètres fixés par un propriétaire de moyens de détermination ou de moyens d'acheminement utilisés pour la mise en oeuvre du procédé.

5. Procédé selon l'une des revendications 1 à 4, dans lequel l'étape de détermination est réalisée en parallèle de l'étape de mise en relation.

6. Procédé selon l'une des revendications 1 à 5, dans lequel l'étape de détermination est réalisée :
• sur demande d'un utilisateur du premier dispositif ou
• sur demande d'un utilisateur du deuxième dispositif.

7. Procédé selon l'une des revendications 1 à 6, dans lequel l'étape de détermination est mise en oeuvre par des moyens de détermination :
• d'un serveur d'application du premier réseau ou du deuxième réseau, ou
• d'un équipement d'accès (210) du deuxième dispositif au deuxième réseau, ou
• d'un élément d'entrée (220) du deuxième réseau, ou
• du deuxième dispositif.

8. Système de communication comprenant :
• un système de mise en relation (210, 220, 320, 120, 110) d'un premier dispositif et d'au moins un deuxième dispositif, le premier dispositif étant connecté à un premier réseau de communication, ledit au moins un deuxième dispositif étant connecté un deuxième réseau de communication, ledit premier dispositif ou ledit premier réseau de communication ou ledit deuxième réseau de communication étant adapté pour la production ou le transfert d'un flux multimédia comprenant N canaux, ledit au moins un deuxième dispositif comprend des moyens de traitement d'un flux multimédia comprenant P canaux, avec N inférieur à P,
• un système de transfert d'un premier flux multimédia (210, 330, 110) entre le premier dispositif et ledit au moins un deuxième dispositif,
• des moyens de détermination de propriétés du premier dispositif et dudit au moins un deuxième dispositif de production, de transfert, de réception ou de traitement d'un flux multimédia, et
• des moyens d'acheminement d'un deuxième flux multimédia, comprenant jusqu'à P - N données multimédia complémentaires, provenant d'un serveur de ressources multimédia vers ledit au moins un deuxième dispositif, ledit acheminement étant réalisé en parallèle du transfert du premier flux multimédia, lesdits moyens d'acheminement étant activés uniquement si N est inférieur à P.

9. Système selon la revendication 8, dans lequel le système de mise en relation et les moyens de transfert comprennent des éléments (110, 120) d'un premier réseau auquel est connecté le premier dispositif et / ou des éléments (210, 220) d'un deuxième réseau auquel est connecté le deuxième dispositif et / ou des éléments (320, 330) d'interconnexion du premier réseau et du deuxième réseau.

10. Système selon l'une des revendications 8 et 9 dans lequel les moyens de détermination sont des moyens :
• d'un serveur d'application du premier réseau ou du deuxième réseau ou
• d'un équipement d'accès (210) du deuxième dispositif au deuxième réseau, ou
• du deuxième terminal.

## Patentansprüche

1. Verfahren zur Kommunikation zwischen mindestens zwei Vorrichtungen, umfassend insbesondere die folgenden Schritte:
- einen Schritt der Herstellung einer Verbindung zwischen einer ersten Vorrichtung und mindestens einer zweiten Vorrichtung,
* wobei die erste Vorrichtung an ein erstes Kommunikationsnetz angeschlossen ist,
* wobei die mindestens eine zweite Vorrichtung a n ein zweites Kommunikationsnetz angeschlossen ist,
* wobei die erste Vorrichtung oder das erste Kommunikationsnetz oder das zweite Kommunikationsnetz für die Erzeugung oder die Weiterleitung eines Multimediastroms, umfassend N Kanäle, vorgesehen ist,
* wobei die mindestens eine zweite Vorrichtung Mittel zur Verarbeitung eines Multimediastroms, umfassend P Kanäle, wobei N kleiner ist als P, umfasst, und
- einen Schritt der Weiterleitung eines ersten Multimediastroms von der ersten Vorrichtung zu der mindestens einen zweiten Vorrichtung,
**dadurch gekennzeichnet, dass** es auch die folgenden Schritte umfasst:
- einen Schritt der Bestimmung, auf Basis von Informationen, die während des Schrittes der Herstellung der Verbindung erhalten werden, ob eine Beförderung eines zweiten Multimediastroms, umfassend bis zu P - N komplementäre Multimediadaten, möglich ist oder nicht, und
- wenn bestimmt wird, dass die Beförderung möglich ist, einen Schritt der Beförderung des zweiten Multimediastroms zu der mindestens einen zweiten Vorrichtung, wobei der Schritt der Beförderung parallel zum Schritt der Weiterleitung des ersten Multimediastroms erfolgt, wobei der zweite Multimediastrom von einem Multimediaressourcenserver für die Übertragung von Multimediadaten kommt.

2. Verfahren nach Anspruch 1, bei dem der erste Multimediastrom oder der zweite Multimediastrom Daten zu einem Tonsignal und/oder Text und/oder einem Videosignal und/oder einem Bildsignal umfasst.

3. Verfahren nach einem der Ansprüche 1 und 2, bei dem der erste Multimediastrom N Kanäle umfasst, und bei dem der zweite Multimediastrom P - N Kanäle umfasst.

4. Verfahren nach einem der Ansprüche 1 bis 3, bei dem ein Inhalt des zweiten Multimediastroms von von einem Benutzer der ersten Vorrichtung festgelegten Parametern, von von einem Benutzer der zweiten Vorrichtung festgelegten Parametern und/oder von von einem Besitzer von Bestimmungsmitteln oder Beförderungsmitteln für den Einsatz zur Durchführung des Verfahrens festgelegten Parametern abhängt.

5. Verfahren nach einem der Ansprüche 1 bis 4, bei dem der Schritt der Bestimmung parallel mit dem Schritt der Herstellung einer Verbindung erfolgt.

6. Verfahren nach einem der Ansprüche 1 bis 5, bei der Schritt der Bestimmung erfolgt:
- auf Antrag eines Benutzers der ersten Vorrichtung oder
- auf Antrag eines Benutzers der zweiten Vorrichtung.

7. Verfahren nach einem der Ansprüche 1 bis 6 bei dem der Schritt der Bestimmung durch Bestimmungsmittel durchgeführt wird:
- von einem Anwendungsserver des ersten Netzes oder des zweiten Netzes, oder
- von einer Zugriffsausrüstung (210) der zweiten Vorrichtung auf das zweite Netz, oder
- von einem Eingangselement (220) des zweiten Netzes oder
- von der zweiten Vorrichtung.

8. Kommunikationssystem, umfassend:
- ein System zur Herstellung einer Verbindung (210, 220, 320, 120, 110) zwischen einer ersten Vorrichtung und mindestens einer zweiten Vorrichtung, wobei die erste Vorrichtung an ein erstes Kommunikationsnetz angeschlossen ist, wobei die mindestens eine zweite Vorrichtung an ein zweites Kommunikationsnetz angeschlossen ist, wobei die erste Vorrichtung oder das erste Kommunikationsnetz oder das zweite Kommunikationsnetz für die Erzeugung oder die Weiterleitung eines Multimediastroms, umfassend N Kanäle, vorgesehen ist, wobei die mindestens eine zweite Vorrichtung Mittel zur Verarbeitung eines Multimediastroms, umfassend P Kanäle, wobei N kleiner ist als P, umfasst,
- ein System zur Weiterleitung eines ersten Multimediastroms (210, 330, 110) zwischen der ersten Vorrichtung und der mindestens einen zweiten Vorrichtung,
- Mittel zur Bestimmung von Eigenschaften der ersten Vorrichtung und der mindestens einen zweiten Vorrichtung zur Erzeugung, Weiterleitung, zum Empfang oder zur Verarbeitung eines Multimediastroms, und
- Mittel zur Beförderung eines zweiten Multimediastroms, umfassend bis zu P - N komplementäre Multimediadaten, die von einem Multimediaressourcenserver kommen, zu der mindestens einen zweiten Vorrichtung, wobei die Beförderung parallel mit der Weiterleitung des ersten Multimediastroms erfolgt, wobei die Beförderungsmittel nur aktiviert werden, wenn N kleiner als P ist.

9. System nach Anspruch 8, bei dem das System zur Herstellung einer Verbindung und die Mittel zur Weiterleitung Elemente (110, 120) eines ersten Netzes, mit dem die erste Vorrichtung verbunden ist, und/oder Elemente (210, 220) eines zweiten Netzes, mit dem die zweite Vorrichtung verbunden ist, und/oder Anschlusselemente (320, 330) zwischen dem ersten Netz und dem zweiten Netz umfassen.

10. System nach einem der Ansprüche 8 und 9, bei dem die Bestimmungsmittel Mittel:
- eines Anwendungsservers des ersten Netzes oder des zweiten Netzes sind oder
- einer Zugriffseinrichtung (210) der zweiten Vorrichtung auf das zweite Netz sind, oder
- des zweiten Endgeräts sind.

## Claims

1. Method of communicating between at least two devices, comprising in particular the following steps:
• a step of hooking up a first device and at least one second device,
• the first device being connected to a first communication network,
• the said at least one second device being connected to a second communication network,
• the said first device or the said first communication network or the said second communication network being adapted for the production or the transfer of a multimedia stream comprising N channels,
• the said at least one second device comprising means for processing a multimedia stream comprising P channels, with N less than P, and
• a step of transferring a first multimedia stream from the first device to said at least one second device,
**characterized in that** it also comprises the following steps:
• a step of determining, on the basis of information received during the step of hooking up, whether or not a trunking of a second multimedia stream, comprising up to P - N complementary multimedia data, is possible, and
• if it is determined that the trunking is possible, a step of trunking the second multimedia stream to the said at least one second device, the said step of trunking being carried out in parallel with the step of transferring the first multimedia stream, the said second multimedia stream originating from a multimedia resources server for the transmission of multimedia data.

2. Method according to Claim 1, in which the first multimedia stream or the second multimedia stream comprises data relating to a sound signal and/or to a text and/or to a video signal and/or to an image signal.

3. Method according to either of Claims 1 and 2, in which the first multimedia stream comprises N channels and in which the second multimedia stream comprises P - N channels.

4. Method according to one of Claims 1 to 3, in which a content of the second multimedia stream is dependent on parameters fixed by a user of the first device, on parameters fixed by a user of the second device, and/or on parameters fixed by a proprietor of determination means or trunking means used for the implementation of the method.

5. Method according to one of Claims 1 to 4, in which the determination step is carried out in parallel with the hookup step.

6. Method according to one of Claims 1 to 5, in which the determination step is carried out:
• on request of a user of the first device or
• on request of a user of the second device.

7. Method according to one of Claims 1 to 6, in which the determination step is implemented by determination means:
• of an application server of the first network or of the second network, or
• of access equipment (210) of the second device for accessing the second network, or
• of an input element (220) of the second network, or
• of the second device.

8. Communication system comprising:
• a system for hooking up (210, 220, 320, 120, 110) a first device and at least one second device, the first device being connected to a first communication network, the said at least one second device being connected to a second communication network, the said first device or the said first communication network or the said second communication network being adapted for the production or the transfer of a multimedia stream comprising N channels, the said at least one second device comprising means for processing a multimedia stream comprising P channels, with N less than P,
• a system for transferring a first multimedia stream (210, 330, 110) between the first device and said at least one second device,
• means for determining properties of the first device and of said at least one second device for producing, transferring, receiving or processing a multimedia stream, and
• means for trunking a second multimedia stream, comprising up to P - N complementary multimedia data, originating from a multimedia resources server to the said at least one second device, the said trunking being carried out in parallel with the transferring of the first multimedia stream, the said trunking means being activated only if N is less than P.

9. System according to Claim 8, in which the hookup system and the transfer means comprise elements (110, 120) of a first network to which the first device is connected and/or elements (210, 220) of a second network to which the second device is connected and/or elements (320, 330) for interconnecting the first network and the second network.

10. System according to either of Claims 8 and 9 in which the determination means are means:
• of an application server of the first network or of the second network or
• of access equipment (210) of the second device for accessing the second network, or
• of the second terminal.
